# EUROPÄISCHE PATENTANMELDUNG

(11) **EP 3 663 624 A1**
(43) Veröffentlichungstag der Anmeldung: **10.06.2020**
(21) Anmeldenummer: 18210661.7
(22) Anmeldetag: 06.12.2018
(51) Int. Cl.: F16L 19/02, F16L 19/028, F16J 15/10

(54) **DICHTRING**

(71) Anmelder: WALTER STAUFFENBERG GMBH & CO. KG, 58791 Werdohl (DE)
(72) Erfinder: Aul, Alexander, 59423 Unna (DE); Civelek, Necip, 58791 Werdohl (DE); Hohlfeld, Ivette, 58119 Hagen (DE); König, Ulrich Stefan, 58849 Herscheid (DE)
(74) Vertreter: Patentanwälte Dörner & Kötter PartG mbB

(57) **Zusammenfassung**

Die Erfindung betrifft eine Dichtring (5) für eine Rohrverbindung (1), die einen Verbindungskörper (2), eine auf diesen auf- oder einschraubbaren Mutter (3) sowie ein eine nach außen auskragende Ausformung (41) aufweisendes Rohr (4) umfasst, das über die Mutter(3) gegen den Verbindungskörper (2) verspannbar ist, welcher Dichtring (5) zur Abdichtung des Rohres (4) gegenüber dem Verbindungskörper (2) bestimmt und geeignet ist, dadurch gekennzeichnet, dass der Dichtring (5) zumindest zwei Schichten (51, 52) aufweist, die aus Materialien unterschiedlicher SHORE-Härte gebildet sind. Die Erfindung betrifft weiterhin eine Rohrverbindung mit einem solchen Dichtring.

## Beschreibung

Die Erfindung betrifft einen Dichtring für eine Rohrverbindung nach dem Oberbegriff des Patentanspruchs 1. Die Erfindung betrifft weiterhin eine Rohrverbindung nach dem Oberbegriff des Patentanspruchs 7.

Zur Realisierung von Rohrverschraubungen sind Rohrverbindungen bekannt, die einen Verbindungskörper umfassen, der das zu verbindende Rohrende aufnimmt und auf den eine Mutter aufschraubbar ist. Der Verbindungskörper weist eine zylindrische Bohrung zur Aufnahme des Rohrendes auf, wobei das Rohrende mit einer nach außen auskragenden Ausformung versehen ist, deren erste Spannfläche an der Stirnfläche des Verbindungskörpers anliegt. Eine zweite Spannfläche der Ausformung ist kegelförmig ausgebildet und liegt an einer Kegelbohrung der Mutter an. Durch anziehen der Schraubverbindung zwischen Mutter und Verbindungskörper kann die auskragende Ausformung gegen die Stirnfläche des Verbindungskörpers gepresst werden. Zur Abdichtung des Verbindungskörpers gegenüber den von diesem aufgenommenen Rohr ist der Verbindungskörper mit einer sich bis zu der Stirnfläche des Verbindungskörper erstreckenden, in Richtung zur Stirnfläche sich erweiternden Kegelbohrung versehen, wodurch zwischen Verbindungskörper und Rohr eine Aufnahme für einen Dichtring gebildet ist. Der Dichtring weist entsprechend der ausgebildeten Aufnahme einen im Wesentlichen dreieckförmigen Querschnitt auf. Eine derartige Rohrverbindung ist beispielsweise aus der DE 195 26 316 A1 bekannt.

Bei Rohrverbindungen der vorgenannten Art kann es je nach Ausbildung des Dichtrings dazu kommen, dass der Dichtringwerkstoff in den Dichtspalt zwischen Verbindungskörper und Rohr extrudiert. Diese Gefahr ist umso größer, umso weicher der Dichtringwerkstoff ist. Je weicher der Dichtringwerkstoff ist, desto besser passt sich dieser jedoch an die abzudichtende Oberfläche an und desto weniger Kraft ist notwendig, eine ausreichende Dichtwirkung zu erreichen. Zur Lösung dieser Problematik ist es aus der WO 2008/154951 A1 bekannt, vor einen Elastomerdichtring einen Metalldichtring anzuordnen, der die Elastomerdichtung bereichsweise umschließt. Diese Lösung hat sich in der Praxis bewährt, erweist sich jedoch als aufwendig.

Hier will Erfindung Abhilfe schaffen. Der Erfindung liegt die Aufgabe zugrunde, einen Dichtring für eine Rohrverbindung der vorgenannten Art bereitzustellen, die aufwandminimiert herzustellen ist und bei der bei unverminderten Dichteigenschaften eine Extrusion des Dichtringwerkstoffes in den Dichtspalt vermieden ist. Gemäß der Erfindung wird diese Aufgabe dadurch gelöst, dass der Dichtsring zumindest zwei Schichten aufweist, die aus Materialien unterschiedlicher SHORE-Härte gebildet sind.

Mit der Erfindung ist ein Dichtring für eine Rohrverbindung der vorgenannten Art geschaffen, die aufwandminimiert herstellbar ist und bei der bei unverminderten Dichteigenschaften eine Extrusion des Dichtringwerkstoffs in den Dichtspalt zwischen den abzudichten Bauteilen wirksam verhindert ist. Erfindungsgemäß kommen hier zwei Schichten zum Einsatz, die in einem Spritzgiessvorgang herstellbar sind, wobei eine Schicht aus einem Material mit einer geringen SHORE-Härte gebildet ist. Diese Schicht übernimmt die Dichtfunktion und ist so weich ausgebildet, dass sich diese optimal an die abzudichten Oberfläche anlegt. Die zweite Schicht weist eine deutlich höhere SHORE-Härte auf und übernimmt eine Stützfunktion gegenüber dem Dichtspalt. Bevorzugt ist der Dichtring aus mehreren, vorzugsweise zwei Elastomerschichten gebildet, die unterschiedliche SHORE-Härten aufweisen.

Die SHORE-Härte ist eine Kennzahl, die vorwiegend für Elastomere und gummielastische Polymere eingesetzt wird. Sie stellt ein Maß für die Werkstoffhärte dar. Elastomere werden in der Regel nach der SHORE"A"Skala gemessen. Eine SHORE-A-Härte von 35° ist sehr weich; 90° ist hart. SHORE"D"-Messgeräte werden für Elastomere empfohlen, die eine Härte von über 90° SHORE-A aufweisen. Unter im nachfolgenden genannten SHORE-Härten sind vorliegend SHORE-"A"- Werte zu verstehen.

In Weiterbildung der Erfindung weist der Dichtring einen dreieckförmigen Querschnitt auf, wobei die kürzeste Seite des Querschnitts durch die Schicht mit dem härteren Material gebildet ist. Dabei ist vorzugsweise ein großer Anteil der an dem Rohr anliegenden Fläche des Dichtrings durch die Schicht mit dem weicheren Material gebildet. Alternativ kann der Dichtring auch einen trapezförmigen Querschnitt aufweisen, wobei die der kürzesten Seite gegenüberliegende Seite des Querschnitts durch die Schicht mit dem härteren Material gebildet ist.

In weiterer Ausgestaltung der Erfindung weist der Dichtring zwei Schichten auf, deren SHORE-Härten eine Differenz von wenigstens 10 aufweist. Hierdurch ist eine gute Dichtwirkung, bei gleichzeitig hoher Stützwirkung des Dichtrings erzielt. Bevorzugt umfasst der Dichtring eine Schicht mit einer SHORE-Härte von kleiner gleich 80 und eine Schicht mit einer SHORE-Härte von größer gleich 90.

Gegenstand der vorliegenden Erfindung ist weiterhin eine Rohrverbindung mit einem Verbindungskörper, einer auf diesen auf- oder einschraubbaren Mutter, die eine in Richtung des Verbindungskörpers sich erweiternde Kegelbohrung aufweist, und einem Rohr, das durch eine Bohrung der Mutter hindurchgeführt ist und das eine nach außen auskragende Ausformung mit zwei Spannflächen aufweist, von denen eine erste Spannfläche parallel zur Stirnfläche des Verbindungskörpers ist und im verspannten Zustand der Rohrverbindung zumindest bereichsweise an dem Verbindungskörper abgestützt ist und die zweite Spannfläche entsprechend der Kegelbohrung der Mutter kegelförmig ausgebildet ist und in der Kegelbohrung der Mutter abgestützt ist, wobei der Verbindungskörper eine radial umlaufende Ausnehmung aufweist, durch die ein Aufnahmeraum für einen Dichtring gebildet ist, der durch die erste Spannfläche begrenzt ist, wobei der Dichtring in der vorstehenden Art und Weise ausgebildet ist. Dabei ist die Ausnehmung vorzugsweise durch eine sich bis zur Stirnfläche des Verbindungskörpers erstreckende, in Richtung zur Stirnfläche sich erweiternde Kegelbohrung gebildet, die an ihrem kleinsten Durchmesser in einer zylindrischen Bohrung des Verbindungskörpers mündet, deren Innendurchmesser besonders bevorzugt im Wesentlichen dem Außendurchmesser des von dem Verbindungsstück aufgenommenen Endabschnitt des Rohres entspricht. Vorteilhaft weist der Aufnahmeraum einen dreieckförmigen Querschnitt auf.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Rohrverbindung und
- Figur 2: die schematische Darstellung des Dichtrings der Rohrverbindung aus Figur 1.

Die als Ausführungsbeispiel gewählte Rohrverbindung 1 besteht im Wesentlichen aus einem Verbindungskörper 2, der ein Rohr 4 aufnimmt und auf den eine Mutter 3 aufgeschraubt ist, wobei zwischen Rohr 4 und Verbindungskörper 2 ein Dichtring 5 angeordnet ist.

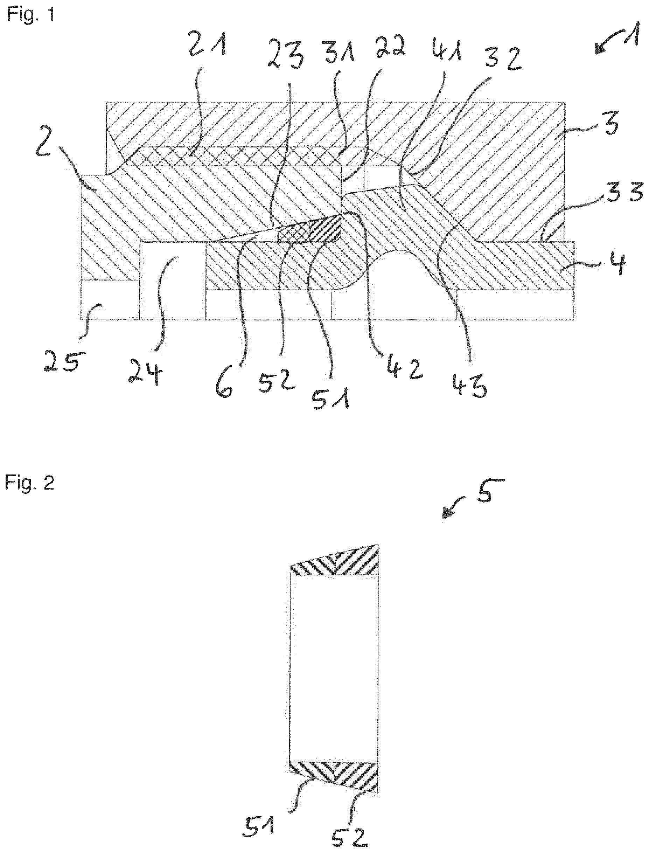

Der Verbindungskörper 2 ist in Figur 1 teilweise, und zwar in Hinsicht auf den Anschluss des Endabschnitts des Rohres 4 dargestellt. Das weitere Ende kann entsprechend dieser Darstellung nochmals vorgesehen sein, so dass der Verbindungskörper 2 dem Anschluss zweier Rohre dient. Alternativ kann dieser auch an seinem nicht gezeigten Ende mit einem Gewinde zum Anschluss an ein Gewindestück versehen sein. Außen umlaufend ist an dem Verbindungskörper 2 ein Außengewinde 21 zum Aufschrauben der Mutter 3 angeordnet, das sich bis zu dessen Stirnfläche 22 erstreckt. Entlang seiner Mittelachse weist der Verbindungskörper 2 eine Durchgangsbohrung 25 auf, die in eine durchmessererweiterte zylindrische Bohrung 24 mündet, an die sich eine Kegelbohrung 23 anschließt, die in Richtung der Stirnfläche 22 sich erweiternd ausgebildet ist.

Auf das Außengewinde 21 des Verbindungskörpers 2 ist die Mutter 3 aufgeschraubt, die hierzu mit einem Innengewinde 31 versehen ist. Die Mutter 3 weist eine Kegelbohrung 32 auf, die in Richtung des Verbindungskörpers 2 sich erweiternd ausgebildet ist. An die Kegelbohrung 32 der Mutter 3 schließt sich eine Durchgangsbohrung 33 an, durch welche das Rohr 4 hindurchgeführt ist.

In den endseitigen Abschnitt des Rohres 4, dessen Außendurchmesser im Wesentlichen dem Innendurchmesser der zylindrischen Bohrung 24 des Verbindungskörpers 2 entspricht, ist eine Ausformung 41 eingeformt. Die Ausformung 41 weist eine erste Spannfläche 42 auf, die im Wesentlichen orthogonal zur Rotationsmittelachse des Rohres 4 angestellt ist und die an der Stirnfläche 22 des Verbindungskörpers 2 anliegt. Die zweite, der ersten Spannfläche 42 gegenüberliegende Spannfläche 43 ist kegelförmig ausgebildet, wobei der Verlauf dieser zweiten Spannfläche 43 im Wesentlichen der Kegelbohrung 32 der Mutter 3 entspricht, an der die Ausformung 41 mit der zweiten Spannfläche 43 anliegt.

Durch die Kegelbohrung 23 des Verbindungskörpers 2 und den endseitigen Abschnitt des Rohres 4 mit dessen erster Spannfläche 42 ist ein ringförmiger Aufnahmeraum 6 mit im Wesentlichen dreieckförmigen Querschnitt zur Aufnahme des Dichtrings 5 begrenzt, der auf das Rohr 4 aufgeschoben ist.

Der Dichtring 5 ist in Figur 2 vergrößert dargestellt. Er weist einen im Wesentlichen trapezförmigen Querschnitt auf, der aus einer Feindichtungsschicht 51 sowie einer an dieser angeformten Stützschicht 52 gebildet ist. Die Feindichtungsschicht 51 ist im Ausführungsbeispiel aus einem Elastomer mit einer SHORE-Härte von 75 gebildet. Die Stützschicht 52 ist aus einem Elastomer mit einer SHORE-Härte von 90 hergestellt und an die erste, weichere Schicht innerhalb des Spritzgiessprozesses angespritzt. Die der kürzesten Seite dieses trapezförmigen Querschnitts gegenüberliegende Seite ist in dieser Ausgestaltung durch die Schicht mit dem härteren Material gebildet. Wie in Figur 1 ersichtlich liegt der Dichtring 5 mit seiner Stützschicht 52 an der ersten Spannfläche 42 der Ausformung 41 des Rohres 4 an und verläuft so entlang des Dichtungsspalts. Diese Schicht ist dabei derart ausgebildet, dass eine Extrusion des Dichtringwerkstoffs in diesen Spalt zuverlässig verhindert ist. Zugleich liegt die härtere Stützschicht 52 an der im Übergang zwischen der Kegelbohrung 23 und der Stirnfläche 22 gebildeten Kante 42 an und schützt damit die weichere Dichtungsschicht 51 des Dichtrings 5 vor einer eventuell unsauberen, scharfkantigen Ausprägung oder vor dem Kontakt mit geringfügigen Beschädigungen, die ggf. vom Anwender bei der Montage aufgebracht werden.

## Patentansprüche

1. Dichtring (5) für eine Rohrverbindung (1), die einen Verbindungskörper (2), eine auf diesen auf- oder einschraubbaren Mutter (3) sowie ein eine nach außen auskragende Ausformung (41) aufweisendes Rohr (4) umfasst, das über die Mutter(3) gegen den Verbindungskörper (2) verspannbar ist, welcher Dichtring (5) zur Abdichtung des Rohres (4) gegenüber dem Verbindungskörper (2) bestimmt und geeignet ist, **dadurch gekennzeichnet, dass** der Dichtring (5) zumindest zwei Schichten (51, 52) aufweist, die aus Materialien unterschiedlicher SHORE-Härte gebildet sind.

2. Dichtring nach Anspruch 1, **dadurch gekennzeichnet, dass** dieser einen dreieckförmigen Querschnitt aufweist, wobei die kürzeste Seite des Querschnitts durch die Schicht mit dem härteren Material gebildet ist.

3. Dichtring nach Anspruch 1, **dadurch gekennzeichnet, dass** dieser einen trapezförmigen Querschnitt aufweist, wobei die der kürzesten Seite gegenüberliegende Seite des Querschnitts durch die Schicht (52) mit dem härteren Material gebildet ist.

4. Dichtring nach einem der vorgenannten Ansprüche, **dadurch gekennzeichnet, dass** dieser aus wenigstens zwei Elastomeren unterschiedlicher SHORE-Härte hergestellt ist.

5. Dichtring nach einem der vorgenannten Ansprüche, **dadurch gekennzeichnet, dass** dieser zwei Schichten (51, 52) aufweist, deren SHORE-Härten eine Differenz von wenigstens 10 aufweist.

6. Dichtring nach Anspruch 5, **dadurch gekennzeichnet, dass** dieser eine Schicht mit einer SHORE-Härte von kleiner gleich 80 und eine Schicht mit einer SHORE-Härte von größer 90 umfasst.

7. Rohrverbindung (1) mit einem Verbindungskörper (2), einer auf diesen auf- oder einschraubbaren Mutter (3), die eine in Richtung des Verbindungskörpers (2) sich erweiternde Kegelbohrung (32) aufweist, und einem Rohr (4), das durch eine Bohrung (33) der Mutter hindurchgeführt ist und das eine nach außen auskragende Ausformung (41) mit zwei Spannflächen (42, 43) aufweist, von denen eine erste Spannfläche (42) parallel zur Stirnfläche (22) des Verbindungskörpers (2) ist und im verspannten Zustand der Rohrverbindung (1) zumindest bereichsweise an dem Verbindungsköper (2) abgestützt ist und die zweite Spannfläche (43) endsprechend der Kegelbohrung (32) der Mutter (3) kegelförmig ausgebildet ist und in der Kegelbohrung (32) der Mutter (3) abgestützt ist, wobei der Verbindungskörper (2) eine radial umlaufende Ausnehmung aufweist, durch die ein Aufnahmeraum (6) für einen Dichtring (5) gebildet ist, der durch die erste Spannfläche (42) begrenzt ist, **dadurch gekennzeichnet, dass** der Dichtring (5) nach einem der vorgenannten Ansprüche ausgebildet ist.

8. Rohrverbindung nach Anspruch 7, **dadurch gekennzeichnet, dass** die Ausnehmung durch eine sich bis zu der Stirnfläche (22) des Verbindungskörpers (2) erstreckende, in Richtung zur Stirnfläche (22) sich erweiternde Kegelbohrung (23) gebildet ist, die an ihrem kleinsten Durchmesser in einer zylindrischen Bohrung (24) des Verbindungskörpers (2) mündet, deren Innendurchmesser bevorzugt im Wesentlichen dem Außendurchmesser des von dem Verbindungsstück (2) aufgenommenen Endabschnitts des Rohres (4) entspricht.

9. Rohrverbindung nach Anspruch 7 oder 8, **dadurch gekennzeichnet, dass** der Aufnahmeraum (6) einen dreieckförmigen Querschnitt aufweist.
